# EUROPEAN PATENT SPECIFICATION

(11) **EP 0 620 428 B1**
(45) Date of publication and mention of the grant of the patent: **23.09.1998**
(21) Application number: 94104126.1
(22) Date of filing: 16.03.1994
(51) Int. Cl.: G01N 15/00, G01N 15/10, C12Q 1/00, C12Q 1/04

(54) **Method for compression of multiparameter event list recordings**
Verfahren zur Kompression von vielparametrigen Ereignistabellen Datensätzen
Méthode pour la compression des articles des tables à consulter des événements

(30) Priority: 19.03.1993 US 35128
(43) Date of publication of application: 19.10.1994
(73) Proprietor: Becton, Dickinson and Company, Franklin Lakes, New Jersey 07417-1880 (US)
(72) Inventor: Bierre, Pierre, San Mateo, California 94063 (US); Mickaels, Ronald A., Mountain View, California 94040 (US); Thiel, Daniel E., Pleasanton, California 94566 (US)
(74) Representative: Selting, Günther, Dipl.-Ing.

(56) References cited:
- EP-A- 0 134 976
- GB-A- 1 328 122
- US-A- 4 599 307
- US-A- 4 727 020
- US-A- 4 769 776
- US-A- 4 987 086

## Description

### Field of the Invention

This invention relates to a method for storing multiparametric data, and more particularly relates to a method for compressing multiparametric data obtained from a flow or image cytometer in list mode.

### Background of the Invention

Particle analysis generally comprises the analysis of cells, nuclei, chromosomes and other particles for the purpose of identifying the particles as members of different populations and/or sorting the particles into different populations. This type of analysis includes automated analysis by means of image and flow cytometry. In either instance, the particle, such as a cell, may be labeled with one or more markers and then examined for the presence or absence of one or more such markers. In the case of a cell, such as a leukocyte, tumor cell or microorganism, the marker can be directed to molecules on the cell surface or to molecules in the cytoplasm. Examination of a cell's physical characteristics (such as size and granularity), as well as the marker(s) it is labeled with can provide additional information which can be useful in identifying the population to which a cell belongs.

Cytometry comprises a well known methodology using multiparameter data for identifying and distinguishing between different cell types in a sample. For example, the sample may be drawn from a variety of biological fluids such as blood, lymph or urine, or may be derived from suspensions of cells from tissues such as brain, lymph node, colon, lung, breast, kidney or liver. In a flow cytometer, cells are passed substantially one at a time through one or more sensing regions where in each region each cell is illuminated by an energy source. The energy source generally comprises an illumination means that emits light of a single wavelength such as that provided by a laser (e.g., He/Ne or argon) or a mercury arc lamp with appropriate filters. Light at 488nm is a presently preferred wavelength of emission.

In series with a sensing region, multiple light collection means, such as photomultiplier tubes, are used to separately record light that would pass through each cell (generally referred to as forward light scatter), light that is reflected orthogonal to the direction of the flow of the cells through the sensing region (generally referred to as orthogonal or side light scatter) and one or more light collection means to separately fluorescent light that may be emitted from the cell, if it is labeled with fluorescent marker(s), as it passes through the sensing region and is illuminated by the energy source. Each of forward light scatter ("FSC"), orthogonal light scatter ("SSC"), and fluorescence emissions ("FL1", "FL2", etc,) comprise a separate parameter for each cell (or each "event"). Thus, for example, up to four parameters can be collected (and recorded) from a cell labeled with two different fluorescence markers, and up to five parameters can be collected for cells labelled with three different fluorescence markers. All of the data for an event can be summed into an "event vector."

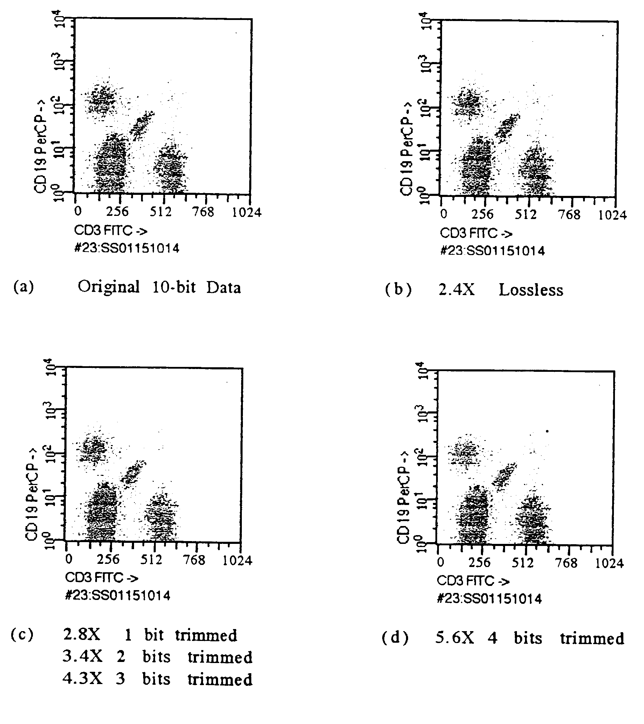

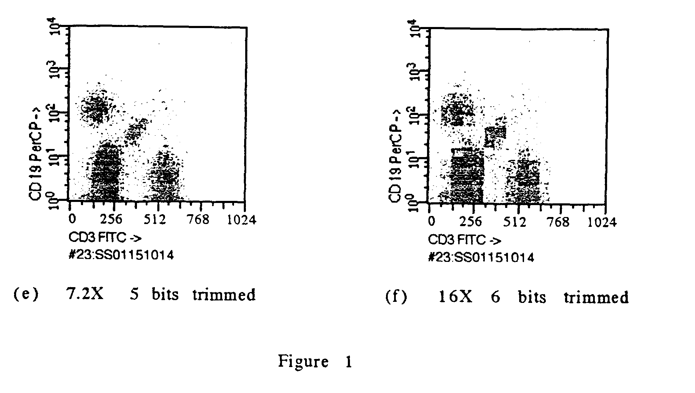

Flow cytometers further comprise data acquisition, analysis and recording means, such as a computer, wherein multiple data channels capture the light scatter and fluorescence emitted by each cell as it passes through the sensing region. The purpose of the analysis system is to classify and count cells wherein each cell presents itself as a set of digitized parameter values. Typically, by current analysis methods, the data collected in real time (or recorded for later analysis, i.e., list mode) is plotted in 2-D space for ease of visualization. Such plots are referred to as dot plots and a typical example of a dot plot drawn from light scatter data recorded for leukocytes is shown in FIG. 1 of U.S. Pat. No. 4,987,086. By plotting orthogonal light scatter versus forward light scatter, one can distinguish between granulocytes, monocytes and lymphocytes in a population of leukocytes isolated from whole blood. By electronically (or manually) "gating" on only lymphocytes using light scatter, for example, and by the use of the appropriate monoclonal antibodies labelled with fluorochromes of different emission wavelength, one can further distinguish between cell types within the lymphocyte population (e.g., between T helper cells and T cytotoxic cells). U.S. Pat. Nos. 4,727,020, 4,704,891, 4,599,307 and 4,987,086 describe the arrangement of the various components that comprise a flow cytometer, the general principles of use and one approach to gating on cells in order to discriminate between populations.

The retention of raw data files consisting of listings of multiparameter event vectors can be prohibitive. As an example, a single data file of 10,000 leukocytes, each cell bearing 5 independent measurements at 10-bit resolution, consumes 100,000 bytes. Several such files are gathered in the process of completing a routine immumoassay by flow cytometry on one patient specimen. In a large reference laboratory, it is not unusual to acquire several hundred such multifile recordings daily.

The problem of data management owing to the size of these listmode datasets can be significantly lessened by transforming each file into a compressed format, either at the time of data collection or thereafter. Conventionally, the compressed data is decompressed (i.e., restored to its original size and format) before it can be analyzed. However, this requirement can be lifted if the compressed data are in a format agreeable to the same types of processing as would be carried out on uncompressed data. The advantage of this feature is that the file never need "reinflate" to becoming useful (i.e., the compression can be considered permanent).

While the benefit of file compression is usually enjoyed archiving routine data more compactly, file compression alternatively can be enjoyed to increase the number of events one is able to record and analyze, given practical limits on the file size one can afford to retain. If the compression factor (i.e., original file size/compressed file size) is 10X, for example, and there is some medical value to examining 10X as many events (e.g., monitoring minimum residual cancer, or other such rare event problem), then the benefit of compression can be taken in lifting the current ceiling on number of events per recording as dictated by storage factors.

In assessing the value of competing data compression methods, compression factor and restoration fidelity are primary valuators, while compression speed, decompression speed, and short-term memory consumption required for both processes are secondary characteristics important enough to be held as acceptance criteria.

Restoration fidelity (i.e., the exactitude with which decompressed data matches the original data) customarily classifies a compression method as being either "lossless" (i.e., exact bit-for-bit restoration of the original data), or "lossy" (i.e., inexact restoration where the most significant information is preserved and the least significant given up, in exchange for a higher compression factor). In general, lossless compression takes advantage of inherent redundancy in the original data format, and squeezes out all such redundancy in the compressed format. Lossy compression goes a step further by making use of the relative significance of those portions remaining after all redundancy has been eliminated, preferring to save the most significant portions of the information for later recovery.

The present invention provides a number of advantages over existing data compression methodologies. For instance, both lossless compression and lossy compression by allowing the user to specify the number of least-significant-bits ("LSBs") to be discarded from each parameter measurement (e.g., in flow cytometry, channel value). If the choice is zero, then the data is restored exactly. If greater than zero, then least significant bit trimming occurs with the trimmed bits being filled in randomly upon decompression. Bit trimming leverages a higher compression factor than occurs in the case of lossless compression; therefore, the user can trade off restored event vector accuracy for compression factor.

The decompression step used herein is relatively simple, executes rapidly, thus minimizing the latency contributed to the process of accessing data when it is stored in compressed form and when it must be decompressed to become usable.

Any method for analyzing the data which merely requires sequential access to the event vectors, and gives the same result regardless of event order, can be retrofitted to analyze directly on the compressed format. The decompression step includes a specialized iterator for accessing events in sequence reading from the compressed datafile; it can be retrofitted into existing analysis algorithms where sequential access to event vectors is sufficient. (Analysis methods which require random access to the event vectors require that the data be in decompressed form). Where data analysis can be performed on compressed data, the compression can be a one-way process which permanently reduces the size of the datafile.

In the case of lossy compression, the error contributed to each parameter measurement is well bounded, and the statistical error contributed to a population of similar event vectors is small and predictable at a given confidence interval.

In the instant invention, the order of event vectors as they occur in the original file becomes scrambled in the decompressed file. The present method derives some of its compression power from loss of event order.

The method's compression factor increases with the multispace negentropy (patternedness, clustering) of each datafile. For example, recordings which contain dense, low-C.V. populations (e.g., calibration beads, red blood cells) will obtain higher compression factors than those where populations are fuzzy, smeared and/or diffuse.

For a stationary data generator (one having stable underlying statistics), the compression factor available from the claimed method increases as does the number of event vectors recorded.

In comparison to bit-packing methods (which compress this type of data by removing all unused bits and trimmed bits), the present method delivers higher compression factors by approximately a factor of 2.

In comparison to multispace histogram-binning methods (which count numbers of exactly matching events on their n-most significant bits, the remaining least-significant bits having been by necessity trimmed in order to contain the combinatoric explosion of histogram bins), the present method does not require bit-trimming as a precondition for compression.

### Summary of the Invention

The present invention comprises a method for the compression of multiparametric data. The method of the invention comprises a compression and decompression steps. The compression step comprises three transformations applied to the listmode data recording:
a) transformation of event vectors to holographic form;
b) sorting of the list of holographic event vectors; and
c) difference coding and run-length encoding of the sorted list.
The decompression step comprises three inverse transformations applied to the compressed listmode data recording:
a) difference and run-length decoding;
b) random scramble event-order; and
c) transformation of holographic event vectors back to original form.

Listmode data, such as FSC, SSC, FL1 and FL2 data obtained from a cellular sample labelled with two fluorescently labelled monoclonal antibodies and analyzed on a flow cytometer for example, is compressed in real time using the method of the invention. The stored, compressed data then can be analyzed at a later point in time in order to discriminate between and among various cellular populations in the sample. The methods of analysis that can subsequently be applied to such data include methods set forth in U.S. Pat. No. 4,727,020.

### Brief Description of the Drawing

FIG. 1 comprises a series of 2D scatter plots for one bivariate projection of a 15,000 event x 5-parameter x 10-bit listmode data recording in its original form (A), after application of lossless compression and decompression (B), in lossy mode with one least significant bit ("LSB") trimmed (C), 2 LSBs trimmed (D), 3 LSBs trimmed (E), 4 LSBs trimmed (F), 5 LSBs trimmed (G), and 6 LSBs trimmed (H).

### Detailed Description

Referring to FIG. 1, listmode data was recorded and stored on an HP 340 computer using FACScan Research software (Becton Dickinson Immunocytometry Systems, "BDIS"). The data was obtained from a sample of lysed, unwashed whole blood cells which had been labelled with CD3 FITC, CD16/56 PE and CD19 PerCp fluorescently labelled monoclonal antibodies (BDIS). The sample was analyzed on a FACScan brand flow cytometer where FSC, SSC, FL1, FL2 and FL3 were recorded for each event. The data was transferred to a Macintosh Quadra 950 using FACSNet software (BDIS), and was compressed, decompressed and plotted using software which incorporates the method of the invention (BDIS).

Since the plot resolution is fixed 7-bit (128 pixels), the restoration inaccuracies contributed in the first three lossy cases go unrevealed. *Compare* FIG.s 1 (A)-(C). The compression factors yielded with each example are indicated:

| | | | |
|---|---|---|---|
| (A) | Original 10-bit Data | (B) | 2.4X Lossless |
| (C) | 2.8X 1 bit trimmed | (D) | 3.4X 2 bits trimmed |
| (E) | 4.3X 3 bits trimmed | (F) | 5.6X 4 bits trimmed |
| (G) | 7.2X 5 bits trimmed | (H) | 16X 6 bits trimmed |

Comparing FIG.s 1 (C)-(H), it can be shown that compression and decompression of data do not lead to a statistically significant change in the analysis of the sample as determined from FIG. 1 (A). Accordingly, depending on the desired level of sensitivity needed for data analysis, the method of data compression used herein can be used without adversely effecting the result which is critical to the practical use of the method.

The method of the invention can generically be referred to as a method for data compression. It comprises two principal steps: data compression and data decompression. In the first step, the bit sequence of each raw event vector is rearranged, concentrating the strongest multispace-positional information ("bits") at the left end of the resultant vector and the weakest multispace-positional information at the opposite end. The resultant vector is termed a "holographic transformation" of the input event vector in the sense that the bits housed in each of its parameter fields becomes smeared ("distributed") throughout the entire resultant vector. This transformation is invertable (the inverse being required later in decompression).

Referring to Table 1, events, event vectors for 5 parameter data and a holographic transform of the event vectors is shown for a hypothetical example. The holographic transform concatenates the most significant bits from all five parameters into a chunk (labelled C1). The 2nd-most-significant bits are regrouped in to chunk C2, and so on, ending with the least-significant bits of all five parameters concatenated to form chunk C10. The holographic event vector consists of 10 chunks (one chunk for each bit in the input vector's parameter field), each chunk having 5 bits (one for each parameter in the input vector). The most significant chunk ("MSC") houses the most significant positional information about the event vector's position in 5D space, and the least-significant chunk ("LSC") the least-significant positional information.

In the second step of the compression method, the event vectors, in holographic form, are sorted without having to rank-order parameters (since they have been smeared). In the sorted listing, similar multispace event vectors (i.e., data clusters) self-organize into sequences which present the opportunity to exploit difference coding and run-length coding. Table 2 illustrates the list of sorted holographic event vectors (produced by the same data generator as in Table 1 above) and the list of associated difference vectors. The homogeneity of the event vectors is apparent in sorted holographic form. Only events issuing from one of the four clusters are represented at the beginning of the sorted list. As a result of this second step, the data are ready to apply vector difference coding and run-length encoding.

In the third compression step, standard coding techniques transform the sorted list of holographic vectors into a difference code seed, a difference code lengths list, a difference code pile, a run length list, and a checksum vector, which taken together constitute a compressed transformation of the original event vector recording. These data objects (along with file identification carried over from the original file) are stored as a compressed datafile.

A difference code works in the following general manner (for purposes of example, consider only univariate sequences). For a sorted list of numbers:
12 22 33 34 40 42 65 100
each entry is coded as the difference between itself and its predecessor. This results in the following sequence:

| Seed | Difference Code Pile | | | | | | | Checksum |
|---|---|---|---|---|---|---|---|---|
| 12 | 10 | 11 | 1 | 6 | 2 | 23 | 35 | 100 |

To decode, one starts with the seed (the first value) and iteratively adds difference code values to obtain each successive element in the original list. The last element is saved as a "checksum" to assure the correctness of the compression process. If the difference codes are small compared to the values, difference code yields efficient compression. The difference vectors in Table 2 illustrate such compressive opportunity. All of the leading zeroes of these difference vectors will be stripped off, yielding approximately 2X reduction in the requisite storage needed to remember these event vectors exactly (at full 10-bit accuracy).

As a means of obtaining still higher compression factors, the method of the invention permits the giving up of a variable number of least-significant-bits from each parameter value, to be filled in randomly upon decompression. Table 3 illustrates how bit trimming leverages compression. The holographic transform pulls together bits into the same chunk having the same numerical significance (within their respective parameters). The least significant 3 bits of the parameter values are isolated in the least-significant 3 chunks of the holographic vector. Giving up these bits transforms into zeroing their associated chunks in holographic space. The difference vectors similarly lose their least-significant 3 chunks, again, approximately halving the number of chunks that need to be stored as difference code.

Both data homogeneity and bit trimming can lead to identical events appearing contiguously in the sorted holographic vector list (see underlined vectors in Table 3). A standard technique for handling runs of identical event is run-length encoding. Very simply, one accumulates a count of identicals in a run, then appends this number to a run length list. A symbol is placed in the difference code indicating that the run length list should be consulted at this point during decompression, and a repetition of the event generated accordingly.

The difference vectors shown in Table 3 summarize the compressive mechanisms of the method. The leading zeroes signify the similarity which a cluster of data vectors shares in common. Increasing homogeneity of population (i.e., pattern, negentropy) attacks the non-zero entries from their left flank. Bit trimming truncates non-zero entries on their right flank, giving up the bits of the original measurements which represent (most likely) the least-valuable information. The swath (bold text) left in the middle represents the non-redundant information content of the original data recording. When encroaching zeroes from both flanks meet each other, identical events are occurring, and they need be represented only by their run length.

The completed code for the above sequence of vectors resides in the following scalars and lists:
Number of Events: **21**
Parameters per Event: **5**
Original Bit Resolution: **10**
Number of Bits Trimmed: **3**
Diff. Code Checksum: **2 8 6 27 27 13 16**

The "Diff. Lengths List" records how many chunks were appended to the "Diff. Code Pile" for each event. A zero entry in the "Diff. Lengths List" records that identical events occurred, and that the run length was appended to the "Run Length List." The "Diff. Code Seed" records the first holographic event needed to begin decoding the difference code, and the "Diff. Code Checksum" records the last holographic vector as a means of error detection at the conclusion of decoding.

In writing out these data structures to file, bit packing is employed to increase the density of stored information by eliminating any unused bit positions. For example, if the chunks that comprise the Diff. Code Pile are 5-bit entities which reside in RAM memory as 8-bit bytes, the unused 3 bits are stripped out during the process of writing out the compressed file. When reading a decompressed file back into memory, these bits are unpacked so that list elements once again are aligned on machine addressable bytes. Bit packing is well known in the realm of data compression, see [cite], and as such requires no detailed disclosure. Its applicability to the finished data structures comprising the method of the invention for compressed formats is a straight-forward extension.

In the first step of decompression, after the compressed-format file has been read into memory, the decompression step can retrieve, in sorted order, the holographic event vectors. After the last holographic vector has been synthesized, it is compared for equality to the checksum vector saved during compression.

In the second step, the effect of having sorted events in sequence, if undesirable, may be removed at decompression time, by randomly scrambling the order of the holographic event vectors being retrieved from the difference and run-length decoding. The original order of event vectors in the original file is lost whether or not this step is performed. Loss of event order is an intrinsic feature of the compression method.

It is to be appreciated that applications which require exact restoration of event order may still benefit from the compression method of this invention. One obvious remedy is to store an inverse event order list (i.e., a lookup table from which the decompression step can lookup the original event number as a function of sorted event number). However, there is significant compromise to compression factor owing to the storage of this list, and in some instances an alternate compression technique that implicitly preserves event order (e.g., bit packing) may give better results.

In the third step, the bit sequence is inverse transformed, restoring the format of an event vector made up of N binary parameter fields. Randomly generated bits are used to fill in for least-significant-bits trimmed during the compression.

The event order scrambling step is optional. It only need be done if one or more of the ensuing data analysis methods require stochastic (random order) presentation of events. Examples are plotting methods which allow plotting only the first N events in the data recording, and adaptive classification methods which presample the first N events to refine classification parameters.

If the ensuing analysis methods to which the data are to be subjected are immune to non-stochastic presentation of events, the event order scrambling step may be skipped with the following benefit. The two required decompression transformations may be carried out singly on each event permitting other event processing to be interspersed. This feature permits that the decompression step be packaged as a specialized iterator within data analysis software, enabling that software to run analysis and visualization methods directly on the compressed format. The advantage is that very large (i.e., > 1 million events) compressed recordings can reside in RAM memory, where their decompressed equivalents are too large for this.

A unique feature of the method of this invention is its ability to place worst case and normal error bounds on. As previously stated, event order is totally destroyed by this method, and one must be sure that the subsequent analyses applied to the data must be immune to rearrangement of event order for this compression method to be applicable. Most statistical population analyses performed on the entire dataset will tolerate such event scrambling, but those that do not may lead to surprising results.

Along the same avenue, the deliberate omission of event order scrambling during decompression, in order to sequentially analyze in compressed format, requires a thorough understanding that decompressed events are unpacked in the most non-stochastic sequence (i.e., the statistics of the events change drastically from start to end). One must be sure that the analysis methods will tolerate the worst rearrangement of event order (i.e., intentional sorting) when directly processing on the compressed file.

In lossless mode, the error to each event vector is zero. If one puts the recovered events back in the original order (by keeping an inverse list for testing purposes), one can verify exact match between original and decompressed datasets. In lossy mode where
- **b** =: number of bits trimmed
- **M** =: original measurement
- **RM** =: restored measurement after decompression
the worst case error on any measurement (i.e., event vector component) is bounded:
epsilon = abs **(M - RM)** ⇐ 2^{b} - 1 It is impossible for a recovered value to fall outside the data range of the original data.

For an infinite number of such measurements, the distribution of error is triangular and symmetrical about zero, as shown below, for the example of **b = 2**.
-3 -2 -1 0 1 2 3

Having this distribution makes it possible to analyze error introduced into a population mean by bit trimming, assuming the following:
- **N** =: population (number of measurements)
- **X** =: mean before compression
- **RX** =: recovered mean after decompression assume no change in population membership
The worst case population mean drift is defined by drawing the worst case error on all individual measurements, all in the same direction:
abs **(X - RX)** ⇐ 2^{b} - 1 (i.e., the worst case population mean drift is the same as the worst case error to an individual measurement). The likelihood of worst case population error vanishes quickly with increasing N:
prob = ( 1/2) ²^{**bN**} For example, for 2 bits trimmed on 5 events, worst case error happens one in a million times, and will change the mean channel value plus or minus 3.

Population drift can be estimated as a function of N at a more reasonable confidence interval, say 99.7% (3 sigma). The errors on individual measurements tend to cancel each other out with increasing N, the population mean error converging slowly toward zero as one over the square root of N:
abs **(X - RX)** < 2^{b} - 1 / sqrt N

For example, for 2 bits trimmed on a 100 event population, 99.7% of the time over repeated application, the restoration error to the population mean will be less than
3 / sqrt(100) = 0.3.

The performance characteristics of a data compression method can be crucial to its commercial viability. If the method's speed is judged unacceptably slow, or its short-term memory claim is judged unacceptably extravagant, the method will not gain commercial usage, even though its primary features of compression factor and restoration fidelity are acceptable. Implicit in the design of any method is a trade-off between execution speed and short-term memory consumption. The performance characteristics of the method of the invention will be analyzed separately.

In general, the compressor's time performance follows a data-width x N logN time bound (N = number of events, data-width being the number of bits per input vector), the limiting operation being the holographic vector sort step. Any sorting method will work which calls on a primitive compare operator of the form "IsGreaterThan" (EventNumber1, EventNumber2), where the arguments specify two event vectors indexed by their position numbers in the original recording, and where the method of the invention supplies this comparator function to the sorting step as a black box.

Memory consumption requires a block sufficient to hold the input mutiparameter event recording, whose use is gradually converted to housing the same vector list in holographic form during the sequential transformation of events to holographic format.

Sorting requires the keeping of a sorted event index list, which is initialized to the identity sequence:
1 2 3 4 ... N
and which the sorting step resequences until it contains the listing of event numbers in their proper sorted order. Difference coding of the sorted holographic vectors (a sequential pass through the sorted event index list) requires additional allocation of memory to hold the 3 lists that comprise the bulk of the compressed format, and worst case bounds hold these lists to a linear multiple (2-3 X) of the input data volume. Dynamic memory allocation can hold the memory claim well below the worst case allocation for data files exhibiting typical negentropies.

Summarizing the compression steps' performance characteristics, the execution time is dominated by the N∗logN bound of the sorting step, and memory requirement run to a few multiples of the memory required to house the input data recording.

The full decompression steps (including randomization of event order) requires two sequential passes. The first pass is done to randomly scramble an event sequence list (initialized to the identity sequence) which will map sorted event number (i.e., the order in which events emerge from difference code) into a random position in the output file. The second pass involves a single pass through the difference code, wherein as each holographic event is reconstructed by adding a difference code to the preceding one, the current holographic vector is transformed from holographic form back into a multiparameter event vector form, and written out at the list location randomly assigned for this vector in the first pass. If the scrambling step is deemed unnecessary, the decompression step merely generates output events in sequence as they emerge from the difference code. In both cases, the execution time is linearly bounded by the data volume of the decompressed file.

The memory requirements of the decompression step are essentially the same as those of the compressor, requiring blocks for the 3 difference code lists, a sequence index list, and a block to house the decompressed event vector recording. Because the actual sizes of the difference code lists are known upon beginning the decompression, they do not involve worst-case allocation, as the compressor requires absent dynamic memory allocation.

A special case permitted by the method of the invention is the ability to analyze directly upon the compressed format, in the case where the analysis is insensitive to event order and where sequential access to the event vectors is sufficient (i.e., random access not required). In this special case, the memory requirements of the decompression step are streamlined to only require blocks for the 3 difference code lists. On the fly, each holographic event vector and its non-holographic transform is created, processed and thrown away under this style of decompression-analysis. The reduced memory bound offered by this option is attractive for rare-event analyses where the associated uncompressed file size would be prohibitive.

All publications and patents mentioned in this specification are indicative of the level of ordinary skill in the art to which this invention pertains. All such publications are herein incorporated by reference to the same extent as if each individual publication were specifically and individually indicated to be incorporated by reference.

It will be apparent to one of ordinary skill in the art that many changes and modifications can be made in the invention without departing from the scope of the appended claims.

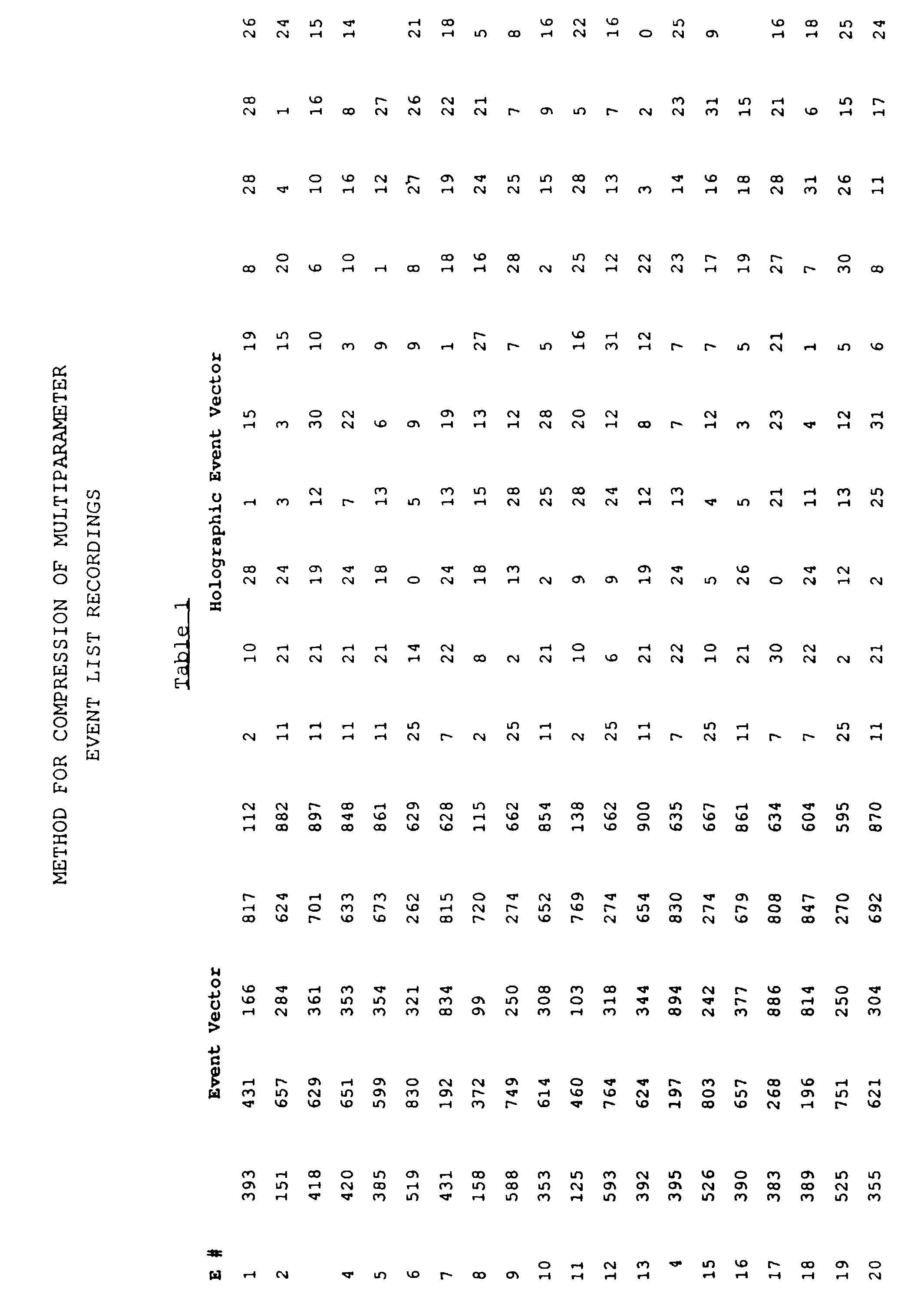

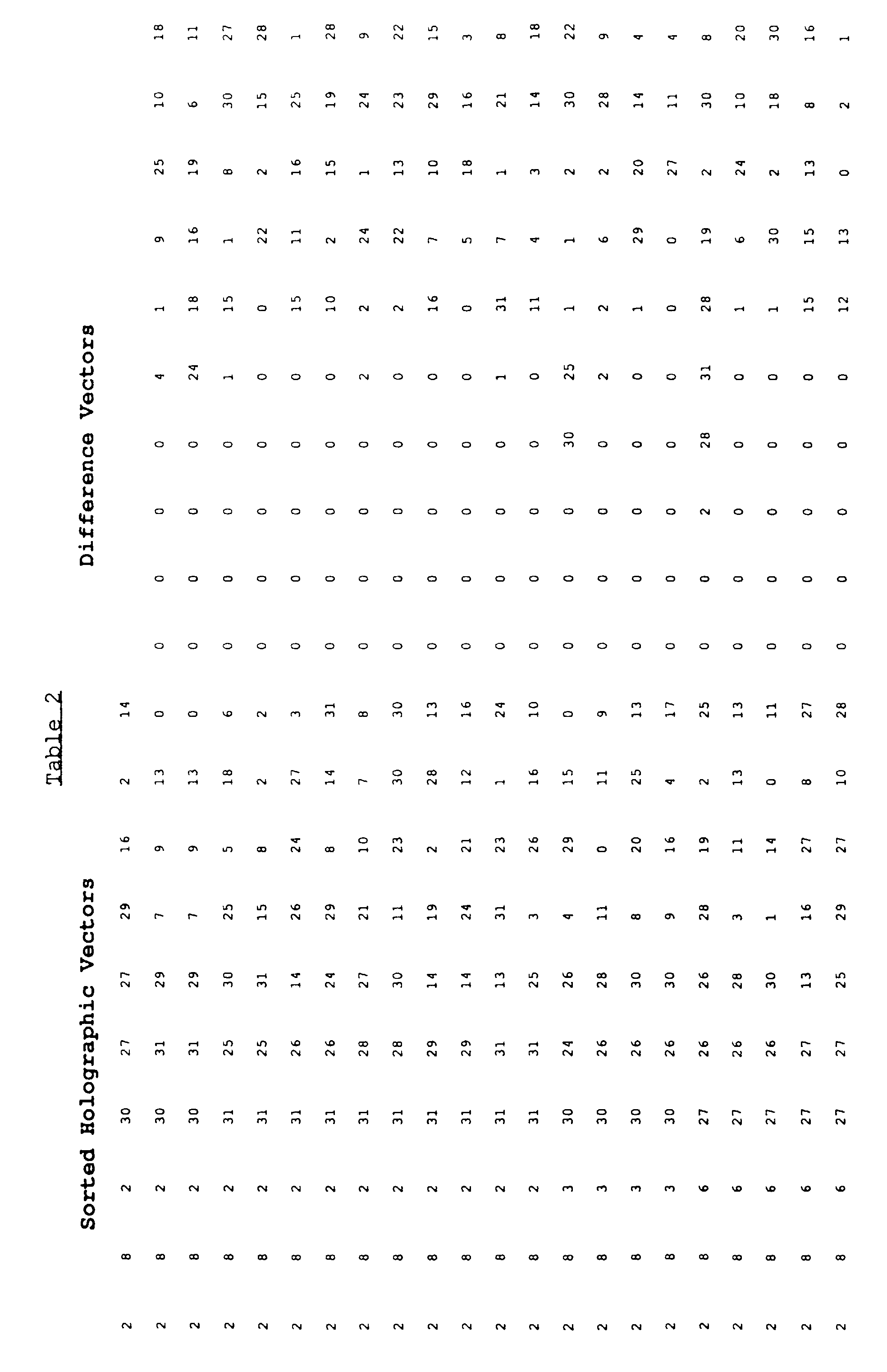

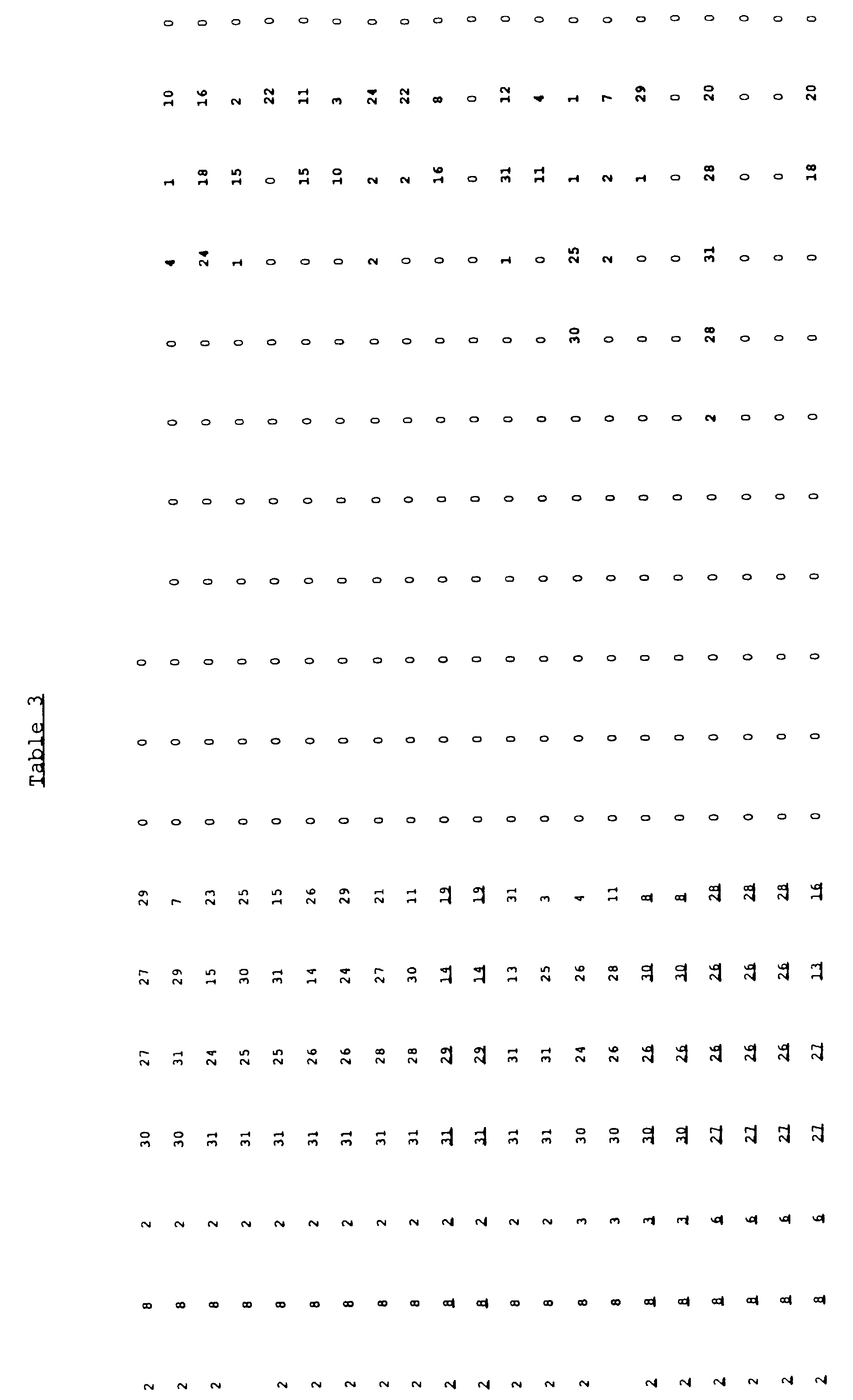

## Claims

1. A method for compressing multiparameter event vectors comprising the steps of:
a) transforming event vectors to holographic form;
b) sorting of the list of holographic event vectors;
c) difference coding and run-length encoding of the sorted list;
d) difference and run-length decoding;
d) randomly scrambling event-order; and
e) transforming holographic event vectors back to original form.

2. The method of claim 1 wherein the data is derived from a sample analyzed by means of flow cytometry.

## Patentansprüche

1. Verfahren zum Komprimieren von Multiparameter-Ereignisvektoren, mit den folgenden Schritten:
a) Transformieren von Ereignisvektoren in holographische Form;
b) Sortieren der Liste holographischer Ereignisvektoren;
c) Differenz-Kodieren und Lauflängen-Kodieren der sortierten Liste;
d) Differenz- und Lauflängen-Dekodieren;
e) zufallsorientiertes Verschlüsseln der Ereignis-Reihenfolge; und
f) Rücktransformieren der holographischen Ereignisvektoren in die ursprüngliche Form.

2. Verfahren nach Anspruch 1, bei dem die Daten aus einer durch Flußzytometrie analysierten Probe abgeleitet werden.

## Revendications

1. Procédé de compression de vecteurs d'événement multi-paramètre comportant les étapes consistant à :
a) transformer des vecteurs d'événement en une forme holographique ;
b) trier la liste de vecteurs d'événement holographiques ;
c) coder par différence et encoder à longueur variable la liste triée ;
d) décoder par différence et à longueur variable ;
e) modifier de manière aléatoire l'ordre d'événement ; et
i) retransformer les vecteurs d'événement holographiques dans la forme d'origine.

2. Procédé selon la revendication 1, dans lequel les données sont obtenues à partir d'un échantillon analysé au moyen d'une cytométrie à écoulement.
